# EUROPEAN PATENT APPLICATION

(11) **EP 4 783 547 A1**
(43) Date of publication of application: **29.07.2026**
(21) Application number: 24872862.8
(22) Date of filing: 24.09.2024
(51) Int. Cl.: H04L 65/1069, H04L 65/1073, H04L 65/1016, H04L 65/1104, H04L 65/1063

(54) **METHOD AND DEVICE FOR SUPPORTING IMS-DC SERVICE IN WIRELESS COMMUNICATION SYSTEM**

(30) Priority: 25.09.2023 KR 20230128548
(71) Applicant: Samsung Electronics Co., Ltd., Suwon-si, Gyeonggi-do 16677 (KR)
(72) Inventor: BAE, Jaehyeon, Suwon-si, Gyeonggi-do 16677 (KR); LEE, Jicheol, Suwon-si, Gyeonggi-do 16677 (KR)
(74) Representative: Gulde & Partner
(86) International application number: PCT/KR2024/014385
(87) International publication number: WO 2025/071154

(57) **Abstract**

The disclosure relates to a 5G or 6G communication system for supporting a higher data transmission rate. Specifically, provided are a method and a device for transferring related information to a data channel application server in order to utilize IMS-related event information for a data channel service during a bootstrap data channel setup signaling or an application data channel setup signaling for an IMS-DC service connection.

## Description

### [Technical Field]

The disclosure relates to an Internet protocol (IP) multimedia subsystem data channel (IMS-DC) service and, more particularly, to a method and a device for transmitting related information to a data channel application server to use the IMS-related event information for a data channel service during in a bootstrap data channel setup signaling procedure or an application data channel setup signaling procedure for IMS-DC service connection.

### [Background Art]

5G mobile communication technologies define broad frequency bands such that high transmission rates and new services are possible, and can be implemented not only in "Sub 6GHz" bands such as 3.5GHz, but also in "Above 6GHz" bands referred to as mmWave including 28GHz and 39GHz. In addition, it has been considered to implement 6G mobile communication technologies (referred to as Beyond 5G systems) in terahertz (THz) bands (for example, 95GHz to 3THz bands) in order to accomplish transmission rates fifty times faster than 5G mobile communication technologies and ultra-low latencies one-tenth of 5G mobile communication technologies.

At the beginning of the development of 5G mobile communication technologies, in order to support services and to satisfy performance requirements in connection with enhanced Mobile BroadBand (eMBB), Ultra Reliable Low Latency Communications (URLLC), and massive Machine-Type Communications (mMTC), there has been ongoing standardization regarding beamforming and massive MIMO for mitigating radio-wave path loss and increasing radio-wave transmission distances in mmWave, supporting numerologies (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large amount of data transmission and a polar code for highly reliable transmission of control information, L2 pre-processing, and network slicing for providing a dedicated network specialized to a specific service.

Currently, there are ongoing discussions regarding improvement and performance enhancement of initial 5G mobile communication technologies in view of services to be supported by 5G mobile communication technologies, and there has been physical layer standardization regarding technologies such as V2X (Vehicle-to-everything) for aiding driving determination by autonomous vehicles based on information regarding positions and states of vehicles transmitted by the vehicles and for enhancing user convenience, NR-U (New Radio Unlicensed) aimed at system operations conforming to various regulation-related requirements in unlicensed bands, NR UE Power Saving, Non-Terrestrial Network (NTN) which is UE-satellite direct communication for providing coverage in an area in which communication with terrestrial networks is unavailable, and positioning.

Moreover, there has been ongoing standardization in air interface architecture/protocol regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

As 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting AR (Augmented Reality), VR (Virtual Reality), MR (Mixed Reality) and the like, 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for providing coverage in terahertz bands of 6G mobile communication technologies, multi-antenna transmission technologies such as Full Dimensional MIMO (FD-MIMO), array antennas and large-scale antennas, metamaterial-based lenses and antennas for improving coverage of terahertz band signals, high-dimensional space multiplexing technology using OAM (Orbital Angular Momentum), and RIS (Reconfigurable Intelligent Surface), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

The IMS system is an IP-based multimedia transmission system that provides various services, such as VoLTE and VoNR, through existing IMS networks linked with LTE or 5G networks. Beyond conventional RTP-based services like voice, video, and text, the objective of the IMS Data Channel (IMS-DC) is to provide diverse supplementary services-such as user location transmission and screen sharing via separate applications-by utilizing data channels linked with the IMS. To transmit these supplementary services within the IMS data network, the UE (User Equipment) transmits signaling information for data channel-based services to the network through a bootstrap data channel connection process. Based on the configuration of the user or service provider and the request information received from the UE, the network delivers application information to the UE, enabling it to download applications for specific services. The UE can then request and receive the corresponding application based on this information. Furthermore, the network allocates a separate media function entity within the network to receive the application data and can perform media resource management service operations to connect this entity with the Data Channel Application Server.

### [Disclosure of Invention]

### [Technical Problem]

The disclosure provides a method and a device for transmitting related information to a data channel application server in order to provide an IMS data channel service utilizing IMS event-related information according to service requirements of a UE or service provider during a bootstrap or application data channel connection process for using an IMS data channel service.

### [Solution to Problem]

According to an embodiment of the disclosure, a method of a data channel signaling function (DCSF) entity in a wireless communication system may include receiving a request for transmission of IMS event-related information from a data channel application server, based on information related to a requirement of a data channel service, receiving subscription information for determining whether a service provider that is able to receive IMS event-related information received from the data channel application server, based on information about the transmission of the IMS event-related information to a home subscriber server (HSS) entity, transmitting an IMS event-related information subscription message to an IMS application server (IMS-AS), based on requirement information related to the transmission of the IMS event-related information from an IMS-AS entity, and receiving a response message.

### [Advantageous Effects of Invention]

The disclosure provides a device and a method capable of effectively providing services in a wireless communication system.

Specifically, a method and a device according to an embodiment of the disclosure provide a method for generating IMS event-related information, based on a service requirement of a service provider and network information in order to provide an IMS data channel service that utilizes IMS event-related information. Further, an entity bootstrap or application data channel setup method for IMS event-related information is provided.

### [Brief Description of Drawings]

FIG. 1 illustrates a network architecture and interfaces of a 5G system according to an embodiment of the disclosure.
FIG. 2 illustrates an example of a structure of an Internet protocol (IP) multimedia subsystem (IMS) data channel (IMS-DC) that provides an IMS service-based data channel service according to an embodiment of the disclosure;
FIG. 3A is a flowchart illustrating an operation in which a UE provides IMS event subscription information to a data channel application server in a bootstrap data channel setup signaling procedure according to an IMS-DC service connection request according to an embodiment of the disclosure.
FIG. 3B is a flowchart illustrating an operation in which a UE provides IMS event subscription information to a data channel application server in a bootstrap data channel setup signaling procedure according to an IMS-DC service connection request according to an embodiment of the disclosure.
FIG. 4 is a flowchart illustrating information transmission and an operation for a data channel application server to request IMS event subscription information from a DCSF according to an embodiment of the disclosure.
FIG. 5 is a flowchart illustrating an application data channel setup signaling procedure of an IMS-application server (AS) using IMS event subscription information according to a connection type of an application data channel according to an embodiment of the disclosure.
FIG. 6 is a flowchart illustrating an application data channel setup signaling procedure of an IMS-AS using IMS event subscription information according to a connection type of an application data channel according to an embodiment of the disclosure.
FIG. 7 is a flowchart illustrating transmission of relevant information and an operation procedure for an IMS-AS to connect an application data channel based on a response message received from a remote network according to an embodiment of the disclosure.
FIG. 8 illustrates an example of a structure of a network entity in a wireless communication system according to various embodiments of the disclosure.
FIG. 9 illustrates an example of a structure of a base station in a wireless communication system according to various embodiments of the disclosure.
FIG. 10 illustrates an example of a structure of a UE in a wireless communication system according to various embodiments of the disclosure.

### [Mode for the Invention]

Hereinafter, an embodiment of the disclosure will be described in detail with reference to the accompanying drawings.

In describing the disclosure, descriptions related to technical contents well-known in the art and not associated directly with the disclosure will be omitted. Such an omission of unnecessary descriptions is intended to prevent obscuring of the main idea of the disclosure and more clearly transfer the main idea. The terms which will be described below are terms defined in consideration of the functions in the disclosure, and may be different according to users, intentions of the users, or customs. Therefore, the definitions of the terms should be made based on the contents throughout the specification.

For the same reason, in the accompanying drawings, some elements may be exaggerated, omitted, or schematically illustrated. Also, the size of each element does not completely reflect the actual size thereof. In the respective drawings, the same or corresponding elements are assigned the same reference numerals.

In the following description, a base station is an entity that allocates resources to terminals, and may be at least one of a gNode B, an eNode B, a Node B (or xNode B (where, x is an alphabet including g and e)), a wireless access unit, a base station controller, a satellite, an airborne, and a node on a network. A user equipment (UE) may include a mobile station (MS), a vehicular, a satellite, an airborne, a cellular phone, a smartphone, a computer, or a multimedia system capable of performing communication functions. In the disclosure, a "downlink (DL)" refers to a radio link via which a base station transmits a signal to a terminal, and an "uplink (UL)" refers to a radio link via which a terminal transmits a signal to a base station. Additionally, a "sidelink (SL)" may exist, which refers to a radio link via which a UE transmits a signal to another UE.

Furthermore, in the following description, LTE, LTE-A, or 5G systems may be described by way of example, but the embodiments of the disclosure may also be applied to other communication systems having similar technical backgrounds or channel types. For example, 5G-Advance, NR-Advance, or 6th generation (6G) mobile communication technologies developed beyond 5G mobile communication technologies (or new radio (NR)) may be included therein, and in the following description, the "5G" may be the concept that covers the exiting LTE, LTE-A, or other similar services. In addition, based on determinations by those skilled in the art, the disclosure may also be applied to other communication systems through some modifications without significantly departing from the scope of the disclosure.

Herein, it will be understood that each block of the flowchart illustrations, and combinations of blocks in the flowchart illustrations, can be implemented by computer program instructions. These computer program instructions can be provided to a processor of a general-purpose computer, special purpose computer, or other programmable data processing apparatus to produce a machine, such that the instructions, which execute via the processor of the computer or other programmable data processing apparatus, create means for implementing the functions specified in the flowchart block or blocks. These computer program instructions may also be stored in a computer usable or computer-readable memory that can direct a computer or other programmable data processing apparatus to function in a particular manner, such that the instructions stored in the computer usable or computer-readable memory produce an article of manufacture including instruction means that implement the function specified in the flowchart block or blocks. The computer program instructions may also be loaded onto a computer or other programmable data processing apparatus to cause a series of operational steps to be performed on the computer or other programmable apparatus to produce a computer implemented process such that the instructions that execute on the computer or other programmable apparatus provide steps for implementing the functions specified in the flowchart block or blocks.

Furthermore, each block in the flowchart illustrations may represent a module, segment, or portion of code, which includes one or more executable instructions for implementing the specified logical function(s). It should also be noted that in some alternative implementations, the functions noted in the blocks may occur out of the order. For example, two blocks shown in succession may in fact be executed substantially concurrently or the blocks may sometimes be executed in the reverse order, depending upon the functionality involved.

As used in embodiments of the disclosure, the term "unit" refers to a software element or a hardware element, such as a field programmable gate array (FPGA) or an application specific integrated circuit (ASIC), and the "unit" may perform certain functions. However, the "unit" does not always have a meaning limited to software or hardware. The "unit" may be constructed either to be stored in an addressable storage medium or to execute one or more processors. Therefore, the "unit" includes, for example, software elements, object-oriented software elements, class elements or task elements, processes, functions, properties, procedures, sub-routines, segments of a program code, drivers, firmware, micro-codes, circuits, data, database, data structures, tables, arrays, and parameters. The elements and functions provided by the "unit" may be either combined into a smaller number of elements, or a "unit", or divided into a larger number of elements, or a "unit". Moreover, the elements and "units" may be implemented to reproduce one or more CPUs within a device or a security multimedia card. Furthermore, the "unit" in embodiments may include one or more processors.

Hereinafter, exemplary embodiments of the disclosure will be described in detail with reference to the accompanying drawings. It should be noted that, in the accompanying drawings, the same or like elements are designated by the same or like reference signs as much as possible. Also, it should be noted that the following accompanying drawings of the disclosure are provided to help an understanding of the disclosure and the disclosure is not limited to configurations or arrangements illustrated in the drawings of the disclosure. In addition, a detailed description of known functions or configurations that may make the subject matter of the disclosure unclear will be omitted. It should be noted that in the following description of the disclosure, only parts necessary for understanding operations according to various embodiments of the disclosure will be described and descriptions of the other parts will be omitted so as not to make the subject matter of the disclosure obscure. Furthermore, various embodiments of the disclosure will be described using terms used in some communication standards (e.g., the 3rd generation partnership project (3GPP)), but they are for illustrative purposes only. Various embodiments of the disclosure may also be easily applied to other communication systems through modifications.

As used herein, each of such phrases as "A and/or B," "A or B," "at least one of A and B," "at least one of A or B," "A, B, or C," "at least one of A, B, and C," and "at least one of A, B, or C," may include all possible combinations of the items enumerated together in a corresponding one of the phrases. Such terms as "a first," "a second," "the first," and "the second" may be used to simply distinguish a corresponding element from another, and does not limit the elements in other aspect (e.g., importance or order).

In the following description of the disclosure, terms and names defined in the 3rd generation partnership project long term evolution (3GPP LTE) and 3GPP 5G standards will be used for the sake of descriptive convenience. However, the disclosure is not limited by these terms and names, and may be applied in the same way to systems that conform other standards.

The 3GPP, which is responsible for cellular mobile communication standardization, has introduced a new core network structure named 5G core (5GC) and is pursuing the standardization in order to push evolution from a 4G LTE system to a 5G system. 5GC supports the following distinguishable functions, compared to an evolved packet core (EPC) that is a network core for 4G.

To meet the demand for wireless data traffic having increased since deployment of 4G communication systems, efforts have been made to develop an improved 5G or pre-5G communication system. Therefore, the 5G or pre-5G communication system is also called a "beyond 4G network" communication system or a "post LTE" system. The 5G communication system defined by 3GPP is called a "new radio (NR) system".

The 5G communication system is considered to be implemented in ultrahigh frequency (mmWave) bands, (e.g., 60GHz bands) so as to accomplish higher data rates. To decrease path loss of radio waves and increase the transmission distance of radio waves in the ultrahigh frequency bands, beamforming, massive multipleinput multiple-output (massive MIMO), full dimensional MIMO (FD-MIMO), array antenna, analog beam forming, and large scale antenna techniques are under discussion in the 5G communication system.

In addition, in the 5G communication system, technical development for system network improvement is under way based on evolved small cells, advanced small cells, cloud radio access networks (cloud RANs), ultra-dense networks, deviceto-device (D2D) communication, wireless backhaul, moving network, cooperative communication, coordinated multi-points (CoMPs), reception-end interference cancellation, and the like.

In the 5G system, hybrid FSK and QAM modulation (FQAM) and sliding window superposition coding (SWSC) as an advanced coding modulation (ACM) scheme, and filter bank multi carrier (FBMC), non-orthogonal multiple access (NOMA), and sparse code multiple access (SCMA) as an advanced access technology have also been developed.

The Internet, which is a human centered connectivity network where humans generate and consume information, is now evolving to the Internet of things (IoT) where distributed entities, such as things, exchange and process information without human intervention. The Internet of everything (IoE), which is a combination of the IoT technology and the big data processing technology through a connection with a cloud server, etc. has emerged. As technology elements, such as "sensing technology", "wired/wireless communication and network infrastructure", "service interface technology", and "security technology" have been demanded for IoT implementation, a sensor network, a machine-to-machine (M2M) communication, machine type communication (MTC), and so forth have recently been researched. an IoT environment may provide intelligent Internet technology (IT) services that create a new value to human life by collecting and analyzing data generated among connected things. IoT may be applied to a variety of fields including smart home, smart building, smart city, smart car or connected cars, smart grid, health care, smart appliances and advanced medical services through convergence and combination between existing information technology (IT) and various industrial applications.

In line with this, various attempts have been made to apply the 5G communication system to IoT networks. For example, technologies such as a sensor network, machine type communication (MTC), and machine-to-machine (M2M) communication are implemented by beamforming, MIMO, and array antenna techniques that are 5G communication technologies. Application of a cloud radio access network (cloud RAN) as the above-described big data processing technology may also be considered an example of convergence of the 5G technology with the IoT technology.

In 5GC, a network slicing function is introduced. As requirements of 5G, 5GC is required to support various terminal types and services (e.g., enhanced mobile broadband (eMBB), ultra reliable low latency communications (URLLC), and massive machine type communications (mMTC)). Such terminals/services each have different requirements for a core network. For example, the eMBB service may require a high data rate, and the URLLC service may require high stability and low latency. A network slicing technology has been proposed to satisfy these various service requirements.

Network slicing may mean a method of virtualizing one physical network to make many logical networks (e.g., network slices). Activated network slices may be called network slice instances, and each network slice instance (NSI) may have a different characteristic. A mobile communication service provider may configure a network function (NF) suitable for the characteristic of each NSI so as to satisfy various service requirements according to terminals/services. For example, the mobile communication service provider may assign an NSI suitable for the characteristic of a service required thereby, so that many 5G services (e.g., eMBB, URLLC, or mMTC) are efficiently supportable.

5GC may easily support a network virtualization paradigm by separating a mobility management function and a session management function. In 4G LTE, all terminals have been provided with services from a network through signaling exchange with single core equipment, which is called a mobility management entity (MME) serving as registration, authentication, and a mobility management and session management function. In 5G, as the number of terminals (including, for example, MTC terminals) has explosively increased and mobility and traffic/session characteristics to be supported have been subdivided according to terminal types, scalability for adding entities according to required functions is inevitably reduced if a single entity (for example, MME) supports all the functions. Therefore, in order to improve scalability in terms of signaling loads and the function/implementation complexity of a core entity responsible for a control plane, various functions are being developed based on a structure of separating a mobility management function and a session management function.

Interactive services require very low latency to support two-way communication. Furthermore, when these services are utilized for content transmission for an interactive service aimed at enhancing accessibility as mentioned above, additional requirements are incurred. In the disclosure, to use a service that utilizes a data channel-based application requiring very low latency, a low latency value required for providing the service from a UE or service provider server may be provided to a network upon a service connection request, and the network may provide a function of retrieving and selecting an appropriate media function entity, based on the required latency value when connecting a bootstrap data channel for the service utilizing the data channel-based application.

The disclosure introduces a method for establishing a connection for a service that utilizes a data channel-based application requiring very low latency, and a process of performing a connection operation between network entities for providing low latency through a bootstrap data channel setup signaling procedure, based on related information by transmitting a related parameter to a network. For a requirement of low latency within a session initiation protocol (SIP), corresponding information may be transmitted in a 3gpp-hint-qos field. Alternatively, when registering information related to the corresponding data channel in a data channel signaling function entity in a data channel server, an application server may register low latency information required for using the service related to the application in combination. The IMS-AS having received the information may use the related information when retrieving a network function entity in order to select a media function entity considering an e2e delay, based on a service requirement. In addition, when registering a network function in an NRF of the media function entity, related information may be additionally included in a media profile and registered, and thus the IMS-AS may support discovery of the network function entity based on the low latency requirement and selection of the media function entity based on the corresponding information.

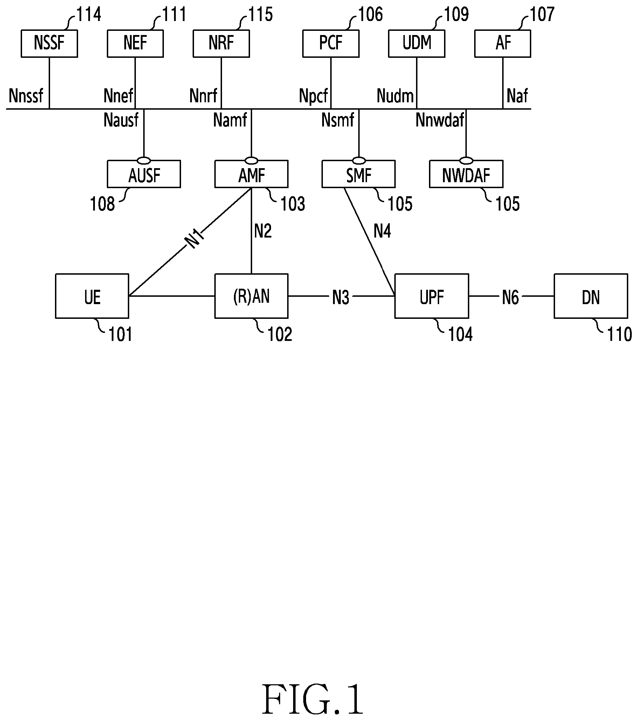

FIG. 1 illustrates a network architecture and interfaces of a 5G system according to an embodiment of the disclosure.

Network entities included in the network architecture of the 5G system in FIG. 1 may include network functions (NFs) according to system implementations, and the NFs may also be called network nodes..

Referring to FIG. 1, the network architecture of the 5G system may include various network entities. For example, the 5G system may include an authentication server function (AUSF) entity 108, a (core) access and mobility management function (AMF) entity 103, a session management function (SMF) entity 105, a policy control function (PCF) entity 106, an application function (AF) entity 107, a unified data management (UDM) entity 109, a data network (DN) 110, a network exposure function (NEF) entity 111, a network slicing selection function (NSSF) entity 114, a network repository function (NRF) entity 115, a network data analytics function (NWDAF), an edge application service domain repository (EDR), an edge application server (EAS), an EAS discovery function (EASDF), a user plane function (UPF) entity 104, a (radio) access network (R)AN) 102, and a terminal, for example, a user equipment (UE) 101.

The respective NFs in the 5G system may support the following functions.

The AUSF 108 processes and stores data for authentication of the UE 101.

The AMF 103 may provide a function for access and mobility management on a per-UE basis, and basically, one UE may be connected to one AMF. Specifically, the AMF 103 may support functions, such as signaling between CN nodes for mobility between 3GPP access networks, radio access network (RAN) CP interface (i.e., N2 interface) termination, non-access stratum (NAS) signaling termination (N1), NAS signaling security (NAS ciphering and integrity protection), AS security control, registration management (registration area management), connection management, idle mode UE reachability (including control and execution of paging retransmission), mobility management control (subscription and policy), intra-system mobility and inter-system mobility support, network slicing support, SMF selection, lawful intercept (LI) (for an AMF event and an interface to an LI system), delivery of session management (SM) messages between the UE and the SMF, a transparent proxy for session management (SM) message routing, access authentication, access authorization including roaming permission checking, delivery of SMS messages between the UE and a short message service function (SMSF), a security anchor function (SAF), and/or security context management (SCM). Some or all of the functions of the AMF entity 103 may be supported within a single instance of one AMF entity.

The DN 110 refers to, for example, an operator service, Internet access, a third-party service, or the like. The DN 110 transmits a downlink protocol data unit (PDU) to the UPF entity 104, or receives, from the UPF entity 104, a PDU transmitted by the UE 101.

The PCF entity 106 provides a function of receiving information on a packet flow from an application server to determine policies, such as mobility management and session management. Specifically, the PCF entity 106 supports functions, such as supporting a unified policy framework for controlling network operations, providing policy rules so that control plane function(s) (e.g., AMF entity, SMF entity, etc.) can enforce the policy rules, and implementing a front end for accessing relevant subscription information for policy decisions in a user data repository (UDR).

The SMF entity 105 may provide a session management function, and when the UE 101 has multiple sessions, each sessions may be managed by a different SMF entity. Specifically, the SMF entity 105 supports a function, such as session management (e.g., session establishment, modification, and release, including tunnel maintenance between the nodes of the UPF entity 140 and the (R)AN 102), UE IP address allocation and management (including selective authentication), selection and control of a UP function, configuration of traffic steering at the UPF entity 104 to route traffic to a proper destination, termination of interfaces towards policy control functions, execution of a control part of a policy and a quality of service (QoS), lawful interception (regarding an SM event and an interface to an LI system), termination of session management (SM) parts of NAS messages, downlink data notification, an initiator of access network (AN)-specific SM information (this is transferred to the (R)AN 102 through N2 via the AMF entity 103), determination of a session and service continuity (SSC) mode of a session, and a roaming function. Some or all of the functions of the SMF entity 105 may be supported within a single instance of one SMF entity.

The UDM entity 109 stores the user's subscription data, policy data, and the like. The UDM entity 109 includes two parts, that is, an application front end (FE) and a user data repository (UDR).

The front end (FE) includes a UDM FE responsible for location management, subscription management, and credential processing, and a PCF entity responsible for policy control. The UDR stores data required for functions provided by the UDM-FE, and a policy profile required by the PCF entity. Data stored in the UDR includes user subscription data and policy data including subscription identifiers, security credentials, access and mobility-related subscription data, and session-related subscription data. The UDM-FE supports functions, such as access to subscription information stored in the UDR, authentication credential processing, user identification handling, access authentication, registration/mobility management, subscription management, and SMS management.

The UPF entity 104 transfers a downlink PDU, received from the DN 110, to the UE 101 via the (R)AN 102, and transfers, to the DN 110, an uplink PDU, received from the UE 101, via the (R)AN 102. Specifically, the UPF entity 104 may support functions, such as an anchor point for intra-/inter-RAT mobility, an external PDU session point for interconnection to a data network, packet routing and forwarding, a user plane part of packet inspection and policy rule enforcement, lawful intercept, and traffic usage reporting, uplink classifier for supporting the routing of traffic flows to the data network, branching points for supporting multi-homed PDU sessions, QoS handling for a user plane (e.g., packet filtering, gating, uplink/downlink rate enforcement), uplink traffic verification (SDF mapping between service data flow (SDF) and QoS flow), transport-level packet marking within uplink and downlink, downlink packet buffering, and downlink data notification triggering. Some or all of the functions of the UPF entity 104 may be supported within a single instance of one UPF.

The AF entity 107 interacts with a 3GPP core network for service provision (e.g., support of a function, such as application influence on traffic routing, access to network capability exposure, and interaction with a policy framework for policy control).

The (R)AN 102 collectively refers to a new radio access network capable of supporting both evolved E-UTRA, which is an evolved version of 4G radio access technology, and new radio (NR) technology (e.g., gNB).

The gNB supports functions, such as functions for radio resource management (i.e., radio bearer control, radio admission control, connection mobility control, and dynamic allocation of resources (i.e., scheduling) to the UE in an uplink/downlink), Internet protocol (IP) header compression, encryption and integrity protection of a user data stream, selection of the AMF upon attachment of the UE when routing to the AMF has not been determined based on information provided to the UE, user plane data routing to the UPF(s), control plane information routing to the AMF, connection setup and release, paging message scheduling and transmission (generated from the AMF), system broadcast information scheduling and transmission (generated from the AMF or operation and maintenance (O&M)), measurement and measurement report configuration for mobility and scheduling, transport level packet marking in the uplink, session management, support of network slicing, QoS flow management and mapping to a data radio bearer, support of the UE that is in an inactive mode, a distribution function of a NAS message, a NAS node selection function, radio access network sharing, dual connectivity, and tight interworking between the NR and the E-UTRA.

The UE 101 refers to a user equipment. The user equipment may be referred to as such terms as "terminal", "mobile equipment (ME)", or "mobile station (MS)". In addition, the user equipment may be a portable device, such as a laptop, a mobile phone, a personal digital assistant (PDA), a smartphone, or a multimedia device, or may be a non-portable device, such as a personal computer (PC) or a vehicle-mounted device.

The NEF 111 provides a means for securely exposing services and capabilities provided by 3GPP network functions, for, for example, a 3rd party, internal exposure/re-exposure, application functions, and edge computing. The NEF 111 receives information (based on the exposed capability (capabilities) of (an)other NF(s)) from the other NF(s). The NEF 111 may store information received as data structured by using a standardized interface as a data storage network function. The stored information may be re-exposed by the NEF entity 111 to other NF entity(entities) and AF entity (entities) and used for other purposes such as analysis.

The EASDF is an NF that is capable of adding, for each fully qualified domain name (FQDN), an address of a domain name system (DNS) server to which a DNS request of the UE is to be forwarded, and an extension mechanisms for DNS (EDNS) client subnet (ECS) option representable by an IP subnet address required to be added when the DNS request of the UE is forwarded. The EASDF receives exchange active sync (EAS) domain configuration information from the EDR, and processes a DNS request message received from the UE, according to the received information. In addition, the EASDF is an NF that performs a function of receiving, from the SMF 105, a UE IP address, location information of the UE in 3GPP, a DNS message handling rule, and a DNS message reporting rule, handling a DNS query message received from the UE and a DNS response message received from a DNS server, and transmitting, according to the DNS message reporting rule, information in a DNS message and statistical information obtained by processing same to the SMF 105.

The NRF 115 supports a service discovery function. The NRF 115 receives an NF discovery request from an NF instance, and provides information on a discovered NF instance to the NF instance. In addition, the NRF 115 maintains available NF instances and services supported by the available NF instances.

For the sake of descriptive convenience, FIG. 1 illustrates a reference model for a case where the UE 101 accesses one DN 110 by using one PDU session, but the disclosure is not limited thereto.

The UE 101 may concurrently access two (i.e., local and central) data networks by using multiple PDU sessions. In this case, two SMFs may be selected for different PDU sessions. However, each SMF may be capable of controlling both the local UPF and central UPF in the PDU session.

In addition, the UE 101 may concurrently access two (i.e., local and central) data networks provided within a single PDU session.

In 3GPP systems, conceptual links connecting NFs in the 5G system are defined as reference points. For example, examples of reference points included in the 5G system of FIG. 1 are illustrated, but more reference points than the reference points described below may be defined in the 5G system architecture.
- N1: A reference point between a UE 101 and an AMF 103
- N2: A reference point between an (R)AN 102 and an AMF 103
- N3: A reference point between an (R)AN 102 and a UPF 104
- N4: A reference point between an SMF 105 and a UPF 104
- N5: A reference point between a PCF 106 and an AF 107
- N6:A reference point between a UPF 104 and a DN 110
- N7: A reference point between an SMF 105 and a PCF 106
- N8: A reference point between a UDM 109 and an AMF 103
- N10: A reference point between a UDM 109 and an SMF 105
- N11: A reference point between an AMF 103 and an SMF 105
- N12: A reference point between an AMF 103 and an AUSF 108
- N13: A reference point between a UDM 109 and an AUSF 108
- N14: A reference point between two AMFs 103
- N15: A reference point between a PCF and an AMF for a non-roaming scenario, and a reference point between a PCF and an AMF in a visited network for a roaming scenario
- Nx: A reference point between an SMF 105 and an EASDF
- Ny: A reference point between an NEF (EDF) 111 and an EASDF

Hereinafter, the disclosure illustrates a method for a UE to transmit and/or receive a plurality of applications and a plurality of streams, transmitted from a data channel application server and a remote user equipment (UE), through a data stream using a single port. Specifically, the disclosure may illustrate a media resource management service operation for supporting multiplexing of data streams through a media function entity or an IMS-AGW in a network. The UE may transmit a request for information about an application supporting multiplexing to a network through a bootstrap data channel setup process, and the network having received the request may transmit an application list including information about an application supporting multiplexing to the UE, thereby supporting a service supporting multiplexing.

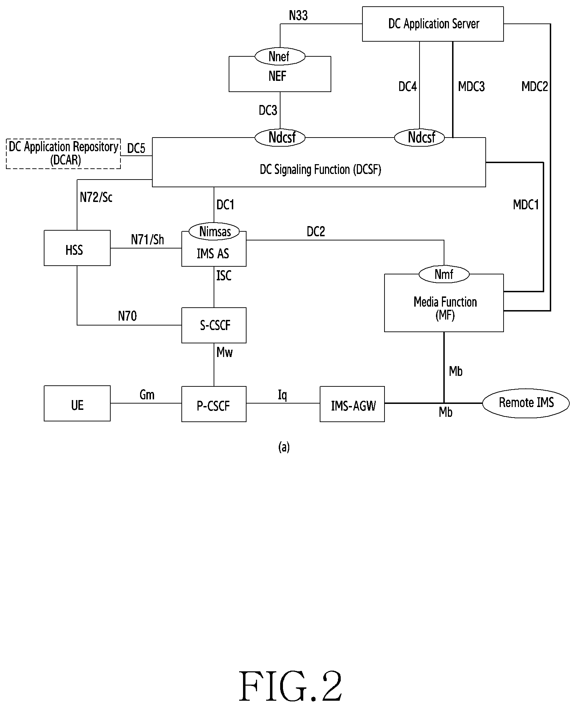

FIG. 2 illustrates an example of an Internet protocol (IP) multimedia subsystem (IMS) data channel (IMS-DC) structure for providing a data channel service based on an Internet protocol (IP) multimedia subsystem (IMS) service according to an embodiment of the disclosure.

A UE may transmit a session initiation protocol (SIP) INVITE message to an existing CSCF for a call session connection request (e.g., a proxy-call session control function (P-CSCF) and a serving-call session control function (S-SCSF)). The SIP INVITE message may include a media-related parameter and multiplexing-related requirement information within a session description protocol (SDP), which are transmitted together to a network. Furthermore, to use an IMS data channel service, the UE may transmit an SDP offer including bootstrap information together with an SDP offer for an existing video or audio session connection via in the SIP INVITE message.

When the SIP INVITE includes a bootstrap data channel SDP offer for a data channel service connection request, the S-CSCF having received the SIP INVITE including the foregoing pieces of SDP information may transmit content of the bootstrap-related SDP offer to an IMS-AS. The S-CSCF may check whether the UE or the network supports an IMS-DC, based on the content of the bootstrap-related SDP offer. When both the UE and the network support the data channel, the S-CSCF may determine to transmit information for bootstrap data channel connection for data channel connection to the IMS-AS.

Upon receiving the bootstrap-related SDP offer message from the S-CSCF, the IMS-AS may first identify whether the UE or a subscriber is able to use the data channel service from a home subscriber server (HSS). When a user is unable to use a data channel, based on a user profile of the user, a multimedia telephony (MMTel) session setup operation may be performed without establishing a data channel through a general IMS process. Further, when the user is unable to use the data channel-based service, the IMS-AS may delete data channel (DC)-related media information in the SIP INVITE message transmitted from the S-CSCF to update the SIP INVITE message, and may transmit the updated SIP INVITE message to the S-CSCF.

When the service user is able to use the IMS data channel-based service, the S-CSCF may perform data channel bootstrapping through a data channel call request to a data channel signaling function (DCSF). The IMS-AS may select a DCSF by performing discovery and selection of a DCSF instance from an NRF, based on local configuration a network operator or information transmitted from the UE. The IMS-AS may transmit a session event control notification (SessionEventControl_Notify) message including at least one information among a SessionEstablishmentRequestEvent, a session ID, a CallingID, a CalledID, a SessionCase, an event initiator, a MediaInfoList, and a DC stream ID to the selected DCSF through the foregoing process.

Upon receiving a DC control request from the IMS-AS, the DCSF may determine a policy on how to generate a bootstrap data channel, based on a relevant parameter in the DC control request message. In addition, the DCSF may determine MDC1 media information so that the UE may download an application through an MF or the MRF.

The DCSF may transmit a MediaControl_MediaInstruction message including at least one of a SessionID or MediaInstructionSet information to the IMS-AS, based on the determined MDC1 media information. The DCSF may include at least one of an MDC1 media endpoint address, a DC stream ID, and replacement information about a URL of an application list transmitted through an MDC1 interface in the MediaInstructionSet to transmit the same to the IMS-AS. Therefore, the DCSF may provide a policy on how to generate a bootstrap data channel using the MF in originating and terminating sides to the IMS-AS.

The IMS-AS may select an MF through a process of discovering and selecting an MF instance or an enhanced MRF that supports the local configuration or a DC media function by using the NRF.

The IMS-AS may transmit a list of media termination descriptors to the MF selected in the foregoing process via an Nmf_MRM_Create message. The IMS-AS may request generation of two different media terminations. One piece of media termination information may be local bootstrap media-related information, and the other piece may represent remote bootstrap media-related information to be provided to a remote UE. Each media termination may include resource allocation requirement information for Mb and MDC1 interfaces. The MF may transmit a negotiation result of data channel media resource information to the IMS-AS.

The IMS-AS may transmit a response to the MediaInstruction request from the DCSF. The response message may include result information of the operation and MDC1 data channel media resource information negotiation information.

The DCSF may store media resource information included in the response message to the MediaInstruction request transmitted from the IMS-AS, and may transmit a response message to the data channel connection notification (SessionEventControl_Notify) request from the IMS-AS to the IMS-AS.

The IMS-AS may transmit a SIP INVITE message including an updated SDP offer to which media information about the MF or enhanced MRF is added to the S-CSCF. The S-CSCF may transmit the received SIP INVITE message including the updated SDP offer to a remote network and UE#2.

UE#2 and the terminating network may transmit an 18X response message including an SDP response related to a bootstrap data channel to the originating network. The MF or the enhanced MRF may update data channel media resource information about UE#2 according to the received SDP response message. UE#2 and the terminating network may transmit a 200 OK response message indicating that the request has been successfully completed.

The IMS-AS may transmit a SessionEventControl Notify message including at least one of a SessionEstablishmentSuccessEvent, a SessionID, or a MediaInfoList to the DCSF to notify the DCSF of successful session connection-related event information. When receiving a response message to the successful session connection event notification from the DCSF, the IMS-AS may transmit a 200 OK message indicating that the bootstrap data channel has been connected to UE#1. Through the foregoing operations, the bootstrap data channel may be established between UE#1 and UE#2 and the originating MF or the enhanced MRF. UE#1 and UE#2 may request a data channel application by transmitting an application request message to the MF or the enhanced MRF. When a multi-DC application is supported, UE#1 and UE#2 may request an application list from the MF or enhanced MRF. The MF or MRF may change a root URL to application-related URL information, based on the replacement URL information received from the DCSF. The MF may transmit the application request message received from the UE to the DCSF. The DCSF may provide an application list or appropriate data applications to UE#1 and UE#2 according to the UE's data channel processing capability and selection. UE#1 and UE#2 may perform the foregoing process through a terminating DCSF when using the terminating MF or MRF according to the position of the MF, and may download an appropriate data channel application.

After establishing the IMS session and the bootstrap data channel and downloading the data channel application to UE#1 and UE#2, UE#1 may transmit a SIP reINVITE message including an updated SDP to the IMS-AS. The updated SDP may include not only the bootstrap data channel information but also at least one of an application data channel request or related DC application binding information.

The IMS-AS may determine whether to notify the DCSF of a media change request event, based on user subscription data information. When the IMS-AS determines to notify the DCSF of the event, the IMS-AS may transmit a SessionEventControl_Notify message including at least one of a MediaChangeRequest event, a session ID, an event direction, an event initiator, and a media info list to the DCSF.

After receiving a session event notification message, the DCSF may determine a policy on how to perform an application data channel connection request according to a relevant parameter received through the notification message and a policy of the network operator. When UE#2 is a target endpoint and an anchor of a local MF or an enhanced MRF is not required, the DCSF may determine to add an application data channel media descriptor in the SDP offer. When the MF or the enhanced MRF is needed as an anchor for an application data channel, the DCSF may transmit a Nimsas_MediaControl message to the IMS-AS to instruct the IMS-AS to perform data channel media resource allocation for the MF or the enhanced MRF.

The DCSF may transmit a response to the session event notification message to the IMS-AS. Subsequently, the IMS-AS may transmit the SIP reINVITE message to the originating S-CSCF, and the S-CSCF may transmit the SIP reINVITE message to the terminating network and UE#2.

UE#2 and the terminating network may transmit an SDP response related to the application data channel including a 200 OK response to the originating network. Upon receiving the SDP offer response message including 200 OK from the terminating network, the IMS-AS may notify the DCSF of a successful data channel change. The DCSF may transmit a response to the notification to the IMS-AS, and the IMS-AS may transmit the 200 OK response to UE#1 through the originating S-CSCF and the P-CSCF. The P-CSCF of the originating network may perform a QoS procedure for application data channel media, based on SDP response information including the 200 OK response. UE#1 may transmit an ACK to the terminating network. Through the foregoing process, an application data channel connection operation between UE#1 and UE#2 may be performed.

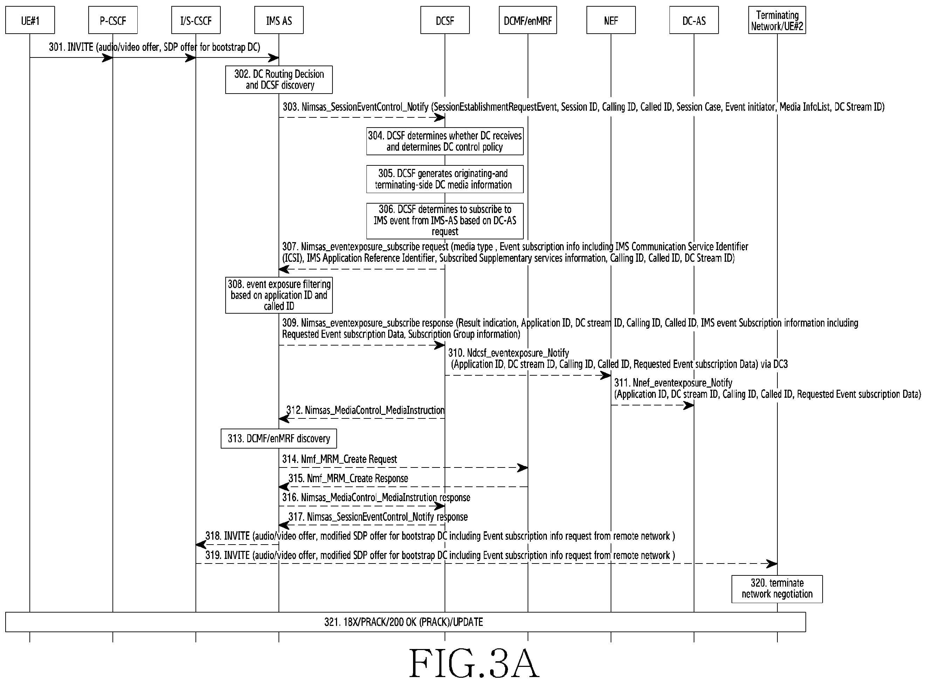

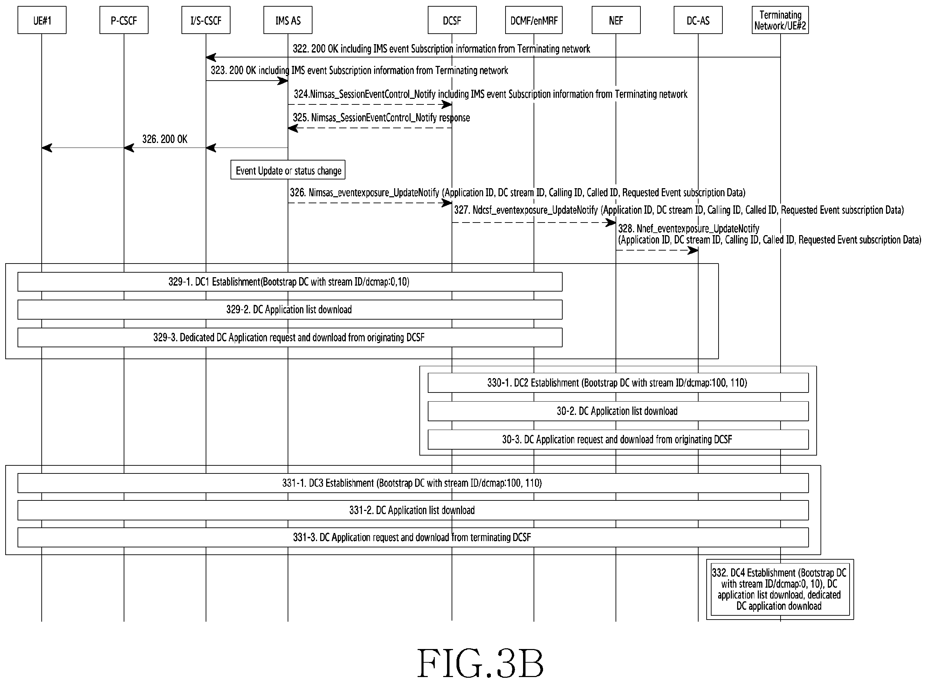

FIG. 3A and FIG. 3B are flowcharts illustrating an operation in which a UE provides IMS event subscription information to a data channel application server in an entity bootstrap data channel setup signaling procedure according to an Internet protocol (IP) multimedia subsystem data channel (IMS-DC) service connection request according to an embodiment of the disclosure.

In operation 301, the UE may transmit a SIP INVITE message including request information for video or audio session connection to a CSCF including a P-CSCF and an S-SCSF. The UE may include a parameter related to media, such as a video or an audio, and QoS-related requirement information in an SDP to transmit the same to a network using the SIP INVITE message. In addition, for a service connection request using additional data in addition to an existing video or audio-based session connection request, the UE may also transmit bootstrap information for IMS data channel session connection in an SDP offer.

When the SIP INVITE includes a bootstrap data channel SDP offer for a data channel service connection request, the S-CSCF having received the SIP INVITE including the foregoing pieces of SDP information may transmit content of the bootstrap-related SDP offer to an IMS-AS. The S-CSCF may check whether the UE or the network supports an IMS-DC, based on the content of the bootstrap-related SDP offer. When both the UE and the network support the data channel, the S-CSCF may determine to transmit information for bootstrap data channel connection for data channel connection to the IMS-AS.

In operation 302, upon receiving the bootstrap-related SDP offer message from the S-CSCF, the IMS-AS may identify whether the UE (e.g., UE#1) or a subscriber is able to use a data channel service from a home subscriber server (HSS). When a user is unable to use a data channel, based on a user profile of the user, an MMTel session setup operation may be performed without establishing a data channel through a general IMS process. Further, when the user is unable to use the data channel-based service, the IMS-AS may delete DC-related media information in the SIP INVITE message transmitted from the S-CSCF to update the SIP INVITE message, and may transmit the updated SIP INVITE message to the S-CSCF.

When the service user is able to use the IMS data channel-based service, the S-CSCF may perform data channel bootstrapping through a data channel call request to a DCSF. The IMS-AS may select a DCSF by performing discovery and selection of a DCSF instance from an NRF, based on local configuration a network operator or information transmitted from the UE.

In operation 303, the IMS-AS may transmit, to the selected DCSF, a session event control notification (SessionEventControl_Notify) message including at least one piece of information among a SessionEstablishmentRequestEvent, a session ID, a CallingID, a CalledID, a SessionCase, an event initiator, a MediaInfoList, and a DC stream ID according to the information transmitted from the UE in operation 302 or a policy of the network operator.

In operation 304, upon receiving a DC control request for IMS-DC service connection from the IMS-AS, the DCSF may determine a bootstrap data channel-related policy, based on a relevant parameter (e.g., including at least one of the CallingID, the CalledID, and the DC stream ID) in the DC control request message and a DCSF service policy.

In operation 305, the DCSF may determine MDC1 media information (e.g., MDC1 endpoint information on the DCSF side) so that each UE may download an application through an MF or MRF.

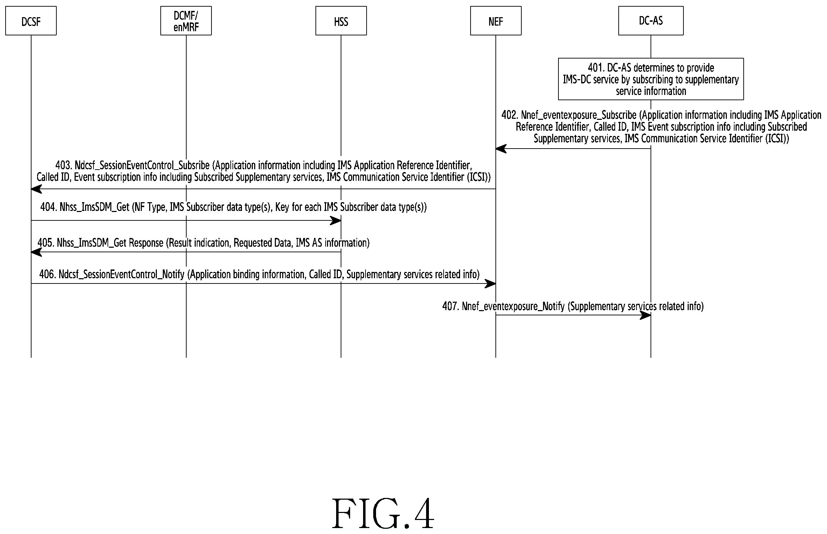

In operation 306, the DCSF may determine, based on the relevant parameter included in the DC control request message, whether to provide application-related information for supporting the data channel service and IMS event subscription information according to a request from a data channel application service provider to a data channel application server. In FIG. 3A and FIG. 3B according to the embodiment of the disclosure, it may be assumed that the data channel service provider configures in advance, based on at least one of UE information (e.g., the calling ID and the DC stream ID) or receiving side information (e.g., the called ID), application-related information for providing an IMS data channel service that utilizes IMS event-related information when registering an application and related information in the DCSF. When the data channel service provider provides application-related information to the DCSF as in an embodiment of FIG. 4, the data channel service provider may also transmit request information for subscribing to IMS event-related information about a particular application. The DCSF may identify whether the data channel service provider or the particular application is allowed to receive the IMS event-related information through the HSS entity, and may assume that a configuration for transmitting the IMS event-related information between the data channel application server and the DCSF has already been completed.

In operation 307, to receive IMS event subscription information, the DCSF may transmit IMS event information including at least one of an IMS communication service identifier (ICSI), an IMS application reference identifier, and subscribed supplementary services information, and related subscriber information (e.g., including at least one of the calling ID, the DC stream ID, or the called ID) to the IMS-AS. When an event is updated or information is changed, the DCSF may request transmission of the information. In addition, the DCSF may request separate IMS event subscription information about a particular subscriber and each subscriber group.

In operation 308, the IMS-AS may filter the IMS event-related information required by the particular application, based on the IMS event information and the related subscriber information received from the DCSF in operation 307, and may generate IMS event subscription information required by the data channel application server.

In operation 309, the IMS-AS may transmit per-application IMS event subscription information to the DCSF, based on the filtered IMS event-related information transmitted in operation 307. Different IMS event subscription information may be provided per user or per particular user group. When the IMS-AS provides separate event subscription information per subscriber or per subscriber group, separate subscriber information or subscriber group information may be included in the IMS event subscription information.

In operations 310 and 311, the DCSF may transmit the IMS event subscription information received from the data channel application server to an NEF and/or DC-AS, based on the IMS event subscription information and the related information received from the IMS-AS. When the data channel application server is an application server of a reliable service provider, the DCSF may transmit the IMS event subscription information directly to the data channel application server through a DC4 interface, not via the NEF. When the data channel application server is an unreliable server or a third-party application server, the DCSF may transmit the IMS event subscription information to the NEF through a DC3 interface, and the initial IMS event subscription information may be transmitted to the data channel application server through an N33 interface.

In operation 312, the DCSF may transmit a MediaControl_MediaInstruction message including at least one of the SessionID or a MediaInstructionSet to the IMS-AS, based on the information received from the data channel application server. The DCSF may include at least one of an MDC1 media endpoint address, the DC stream ID, and replacement information about a URL of an application list including information about an application that supports multiplexing transmitted through an MDC1 interface in the MediaInstructionSet to transmit the same to the IMS-AS. Through the foregoing operation, the DCSF may provide the IMS-AS with a policy on how to generate a bootstrap data channel using an MF in originating and terminating sides.

In operation 313, the IMS-AS may select an MF or an enhanced MRF, based on the information received from the DCSF. The IMS-AS may transmit an NF discovery request (NFDiscovery_Request) message for discovery and selection of an MF instance or an enhanced MRF to the NRF. The NRF may select an appropriate MF, based on MF profile information in the NF discovery request message for MF selection transmitted from the IMS-AS. The NRF may select an MF that satisfies an MF profile requirement received from the IMS-AS, and may transmit the MF profile information to the IMS-AS through an NF discovery request response (NFDiscovery_Request Response) message.

In operations 314 and 315, the IMS-AS may transmit a list of media termination descriptors to the MF selected in the foregoing process (e.g., operation 313) via an Nmf_MRM_Create message. The IMS-AS may request generation of two different media terminations. One piece of media termination information may be local bootstrap media-related information, and the other piece of media termination information may represent remote bootstrap media-related information to be provided to a remote UE. Each media termination may include resource allocation requirement information for Mb and MDC1 interfaces. The MF may transmit a negotiation result of data channel media resource information to the IMS-AS.

In operation 316, the IMS-AS may receive a data channel media resource allocation result from the MF, and may transmit a response to the MediaInstruction request (MediaControl_MediaInstruction) to the DCSF. The response message may include result information of the operation (e.g., operation 314 and operation 315) and MDC1 data channel media resource negotiation information.

In operation 317, the DCSF may store media resource information included in the response message to the MediaInstruction request transmitted from the IMS-AS, and may transmit a response message to the data channel connection notification (SessionEventControl_Notify) request from the IMS-AS to the IMS-AS.

In operation 318, the IMS-AS may transmit, to the S-CSCF, a SIP INVITE message including at least one of updated SDP offers to which media information about the MF or the enhanced MRF or an IMS event subscription information request related to the remote UE in a remote network is added.

In operation 319, the S-CSCF may transmit the received SIP INVITE message including at least one of the updated SDP offers including the media information about the MF or the enhanced MRF or the IMS event subscription information request related to the remote UE in the remote network to the remote network and UE#2.

In operation 320, the remote network and UE#2 may perform a negotiation process of the remote network and the UE for bootstrap data channel connection, based on updated SDP offer information received in operation 319 in the same or similar manner as in the originating side. When receiving the IMS event subscription information request related to the remote UE in the remote network, the remote network and UE#2 may receive IMS event subscription information related to the remote UE in the remote network from an IMS-AS of the remote network, and may include the same in a 200 OK response message.

In operation 321, when there is a requirement related to update or change of the bootstrap data channel, the remote (terminating) network and the UE may transmit an 18X response message including an SDP response to the originating network. The MF or enhanced MRF may update UE#2-related data channel media resource information according to the received SDP response message.

In operation 322, the remote network and the UE (e.g., UE#2) may transmit a 200 OK response message including the IMS event subscription information related to the remote UE in the remote network to the S-CSCF of the originating network.

In operation 323, upon receiving the 200 OK response message including the IMS event subscription information related to the remote UE in the remote network from the remote network and the UE (e.g., UE#2), the S-CSCF may transmit the IMS event subscription information related to the remote UE in the remote network in the 200 OK response message to the IMS-AS.

In operation 324, upon receiving the 200 OK response message including the IMS event subscription information related to the remote UE in the remote network from the S-CSCF, the IMS-AS may transmit a session event control notification (SessionEventControl_Notify) message including the IMS event subscription information related to the remote UE in the remote network to the DCSF, thereby notifying the DCSF of successful session connection-related event information. When receiving the IMS event subscription information related to the remote UE in the remote network in operation 324, the DCSF may transmit the IMS event subscription information about the remote network to the data channel application server in operation 327 and operation 328.

In operation 325 and operation 326, the IMS-AS may receive a response message to the successful session connection event notification from the DCSF. The IMS-AS may transmit a 200 OK message including bootstrap-related SDP answer information indicating that the bootstrap data channel has been successfully established to UE#1.

When the IMS event subscription information is changed or updated, the IMS-AS may transmit updated or changed IMS event subscription information corresponding to a particular subscriber or subscriber group to the DCSF in operation 326.

In operation 327 and operation 328, upon receiving the updated or changed IMS event subscription information from the IMS-AS, the DCSF may transmit the updated or changed IMS event subscription information to the data channel application server using the updated or changed IMS event subscription information, thereby providing an IMS data channel service.

In operation 329 and operation 330, an operation for bootstrap data channel connection between UE#1 and UE#2, and the originating MF or the enhanced MRF may be performed. The UE having received the application list including the information about the application supporting multiplexing may select an application supporting multiplexing according to a selection of a service user or the policy of the network operator. To download the application supporting multiplexing, the UE may transmit an application request message to the DCSF through the MF or enhanced MRF. Upon receiving the application request message from the UE, the MF or MRF may change a root URL to application-related URL information, based on the replacement URL information received from the DCSF in operation 314. The MF or the MRF may transmit the application request message received from the UE to the DCSF through MDC1. The DCSF may provide an application list or appropriate data applications to UE#1 and UE#2 according to a UE's data channel processing capability and selection. When the DCSF does not have a requested data channel application, the DCSF may request the application from the data channel application server, and may transmit the requested data channel application to UE #1 and UE #2 through MDC1 and MDC3. Through the foregoing process, the UE may download the application received by the UE through the IMS data channel, and may simultaneously receive application-related information, such as application binding information. The application-related information may include, for example, a bootstrap DC stream ID indicating a bootstrap channel through which the received application is received. The application-related information may provide information about a data channel server from which the UE receives the application among a local or remote data channel server (e.g., the DCSF) through the bootstrap DC stream ID or bootstrap DC ID, and may provide information for connecting to an appropriate data channel server by including the information in an application data channel setup signaling procedure.

In operation 331 and operation 332, an IMS data channel service may be provided via a bootstrap data channel using an MF or an MRF on the terminating network depending on the position of the MF or MRF. The UE having received the application list including the information about the application supporting multiplexing may select an application supporting multiplexing according to a selection of the service user or the policy of the network operator. To download the application supporting, each UE may transmit an application request message to a terminating DCSF through the MF or enhanced MRF in the terminating network. The terminating DCSF may provide an application list or appropriate data applications to UE#1 and UE#2 according to a UE's data channel processing capability and selection. When the DCSF does not have a requested data channel application, the DCSF may request the application from the data channel application server, and may transmit the application to UE #1 and UE #2 through MDC1 and MDC3. Information related to the application may include, for example, a bootstrap DC stream ID indicating a bootstrap channel through which the application is received. The information related to the application may provide information about a data channel server from which the UE receives the application among a local or remote data channel server (e.g., the DCSF) through the bootstrap DC stream ID or bootstrap DC ID, and may provide information for connecting to an appropriate data channel server by including the information in an application data channel setup signaling procedure.

FIG. 4 is a flowchart illustrating information transmission and an operation for a data channel application server to request IMS event subscription information from a DCSF according to an embodiment of the disclosure.

In operation 401, the data channel application server may determine to request IMS event subscription information from an IMS network in a data channel application server of a particular application or a particular subscriber or subscriber group.

In operation 402 and operation 403, the data channel application server may transmit an IMS event subscription information request message that includes application-related information including at least one of a called ID or an IMS application reference identifier and IMS event subscription information including at least one of subscribed supplementary services or an IMS communication service identifier (ICSI) to the DCSF via an NEF.

In operations 404 and 405, the DCSF may identify, through an HSS, information about whether the IMS event subscription information requested by the data channel application server is available, based on the IMS event subscription information request message.

In operations 406 and 407, when a corresponding data channel application service provider is able to receive the IMS event subscription information, the DCSF may transmit a response message to the IMS event subscription information request that includes whether the IMS event subscription information request is accepted to the data channel application server. Subsequently, when the DCSF receives the IMS event subscription information from the IMS-AS through a bootstrap data channel or application data channel setup signaling procedure, the DCSF may transmit the IMS event subscription information to the data channel application server in operation 406 and operation 407.

The DCSF may receive an application requiring IMS event subscription information and application-related information in advance from the data channel application server through the embodiment of FIG. 4. Subsequently, in the bootstrap data channel or application data channel setup signaling procedure, the DCSF may request the IMS event subscription information from the IMS-AS, based on an application and particular subscriber information requested by a UE.

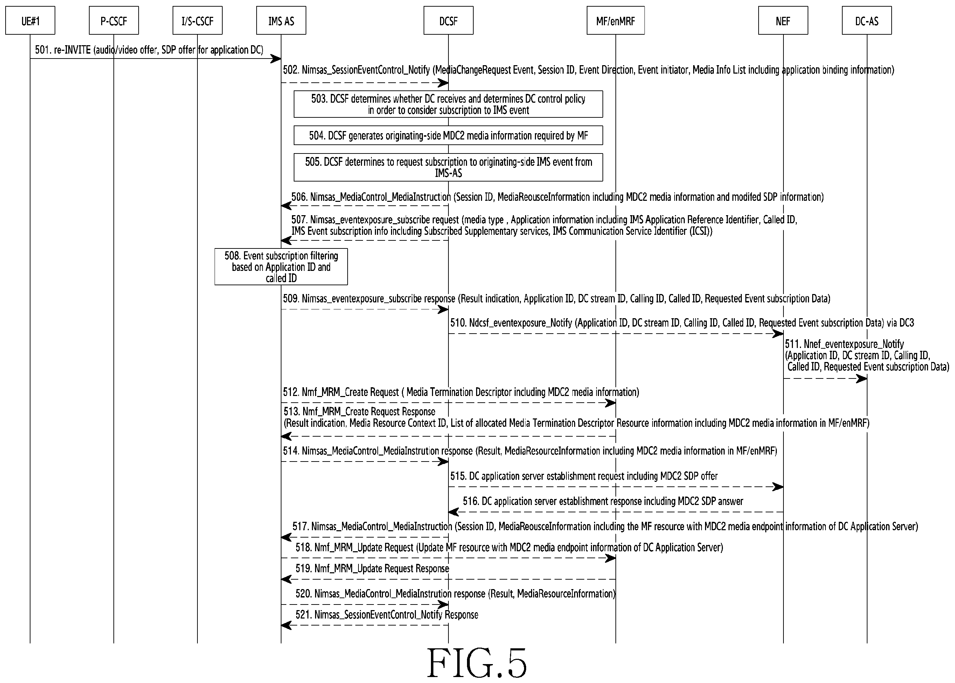

FIG. 5 is a flowchart illustrating an operation in which a UE provides IMS event subscription information to a data channel application server in an application data channel setup signaling procedure according to an IMS-DC session connection request according to an embodiment of the disclosure.

FIG. 5 is a flowchart illustrating a method for transmitting information for updating a DCSF policy and updating a related media resource in an MF entity to perform an application data channel connection operation considering a person-to-application (P2A) connection type according to an embodiment of the disclosure.

In operation 501, an IMS-AS may receive an application data channel-related SDP offer message for application data channel connection from a UE through an S-CSCF. The IMS-AS may transmit a request for application data channel connection to the DCSF, based on an application data channel connection request message including SDP offer information received from the S-CSCF and a bootstrap stream ID. Here, when application data channel connection is performed through a local DCSF, based on the bootstrap stream ID, the local IMS-AS may determine to generate a session event control notification (SessionEvent_Control_Notify) message. When application data channel connection is performed through a remote DCSF, based on the bootstrap stream ID, the IMS-AS may retransmit the SDP offer information received from the S-CSCF through the S-CSCF, thereby requesting a remote network to transmit the SDP offer information. An S-CSCF within the remote network having received the updated SDP offer may request application data channel connection. When a service user is able to use an IMS data channel-based service, the IMS-AS may perform a media data channel connection operation for transmitting and receiving application data by transmitting a session connection request for application data channel setup to the DCSF. The IMS-AS may select a DCSF (e.g., the local DCSF or the remote DCSF), based on a bootstrap DC ID received during a bootstrap data channel connection process. In this embodiment, it is assumed that an application data channel connection operation using the local DCSF and an MF is performed.

In operation 502, the IMS-AS may transmit a session event control notification (SessionEventControl_Notify) message including at least one of a MediaChangeRequest event, a session ID, an event direction, an event initiator, or a media info list to the DCSF for an application data channel connection request.

In operation 503, the DCSF having received the information including the media change request event may recognize that transmission of IMS event subscription information to the data channel application server is required when using an IMS data channel service through a data channel application, based on application-related binding information. When recognizing that the transmission of the IMS event subscription information is required, the DCSF may update a data channel control policy for an application data channel using the IMS event subscription information.

In operation 504, when a connection type of the application data channel is a P2A connection type, based on media-related information received from the IMS-AS, the DCSF may generate related information for data channel application server connection. When the connection type of the application data channel is an application data channel using a data channel application server, based on the related information about the application data channel, the DCSF may determine to generate data channel media resource information including information (MDC2 endpoint) for media data channel connection and to update the data channel control policy.

In operation 505, the DCSF may determine to request IMS event subscription information from an originating network in consideration of the application data connection type, and a policy and a requirement related to the data channel application. The DCSF may determine whether to provide application-related information for supporting the data channel service and IMS event subscription information according to a request by a data channel application service provider to the data channel application server, based on a related parameter in a DC control request message. In an embodiment of the disclosure, it may be assumed that the data channel service provider transmits in advance, to the DCSF, information about an application that provides the IMS data channel service using IMS event-related information, based on at least one of UE information (e.g., including at least one of a calling ID or a DC stream ID) or receiver information (e.g., a called ID). When providing the DCSF with the application-related information as in the embodiment of FIG. 4, the data channel service provider may transmit request information for subscribing to IMS event-related information about a specific application in combination.

In operation 506, the DCSF may include information about an MF for application data channel connection and the data channel application server in data channel media resource information, and may transmit the same to the IMS-AS through media-related instruction (MediaInstruction) information for media control. The media resource information may include information for whether to update or add a data channel media resource in an MF entity. The IMS-AS may transmit packets in a user-plane data channel from each UE to the MF or enMRF. The MF or enMRF may receive, from the DCSF, the media resource information including the media instruction information for transmitting the packets in the user-plane data channel received from the IMS-AS to the data channel application server via an MDC2 interface. The IMS-AS may transmit allocation of media resource information and a request for MDC2 media information to the MF. The MF may allocate a data channel media resource for transmitting application transmitted from the UE to the data channel application server by using the MDC2 media information request.

In operation 507, the DCSF may transmit at least one of IMS event information including at least one of an IMS communication service identifier (ICSI), an IMS application reference identifier or subscribed supplementary services information, or related subscriber information (e.g., including at least one of a calling ID, a DC stream ID, or a called ID) to the IMS-AS in order to receive the IMS event subscription information. When an event is updated or information is changed, the DCSF may request transmission of updated or changed information. In addition, the DCSF may request separate IMS event subscription information per particular subscriber and subscriber group.

In operation 508, the IMS-AS may filter IMS event-related information required by a particular application, based on at least one of the IMS event information or the related subscriber information received from the DCSF in operation 507, thereby generating IMS event subscription information required by the data channel application server.

In operation 509, the IMS-AS may transmit IMS event subscription information per application, based on the filtered IMS event-related information transmitted in operation 507. Different IMS event subscription information may be provided per user or per particular user group. When providing separate event subscription information per subscriber or per subscriber group, the IMS-AS may also provide separate subscriber information or subscriber group information in combination within the IMS event subscription information.

In operation 510 and operation 511, the DCSF may transmit the received IMS event subscription information to the data channel application server, based on at least one of the IMS event subscription information or related information received from the IMS-AS. When the data channel application server is an application server of a reliable service provider, the DCSF may transmit the IMS event subscription information directly to the data channel application server through a DC4 interface, not via an NEF. When the data channel application server is an unreliable server or a third-party application server, the DCSF may transmit the IMS event subscription information to the NEF through a DC3 interface, and the initial IMS event subscription information may be transmitted to the data channel application server through an N33 interface.

In operation 512, the IMS-AS having received the data channel media resource including MDC2 media information and updated SDP information may transmit media resource information for application data channel connection considering the P2A connection type to the MF or enMRF through a media resource management request (Nmf_MRM_Create Request) message. When transmitting application data of the UE to the data channel application server using the MRF, the UE may request the MRF to allocate a related data channel medal resource through an Mr'/Cr interface.

In operation 513, the MF may transmit MDC2 media information and media resource allocation result information of the MF considering the P2A connection type to the IMS-AS through a media resource management request response (Nmf_MRM_Create Request Response) message.

In operation 514, the IMS-AS may transmit, to the DCSF, media resource information of the MF entity for P2A connection including the MDC2 media information received from the MF or enMRF

In operation 515 and operation 516, the DCSF may store the media resource information, and may transmit a P2A application data channel establishment request to the data channel application server through DC3 or DC4. When the data channel application server accepts the application data channel establishment request transmitted through the foregoing process, the data channel application server may transmit MDC2-related SDP response information (MDC2 media endpoint information) to the DCSF.

In operation 517, the DCSF may update the data channel media resource, based on the MDC2 media endpoint information of the data channel application server transmitted from the data channel application server, and may transmit data channel media resource information updated based on the MDC2-related SDP response information (MDC2 media endpoint information) to the IMS-AS.

In operations 518 and 519, the IMS-AS may request the media function entity to update a resource, based on the updated data channel media resource information, and may receive an updated result value from the MF.

In operation 520, after receiving the updated result value from the MF, the IMS-AS may notify the DCSF of response information regarding a media control-related instruction including a result of successful data channel-related media resource update.

In operation 521, after receiving the response information regarding the media control-related instruction, the DCSF may transmit, to the IMS-AS, a response message including an updated SDP answer based on MDC2-related information for the application data channel connection considering the P2A connection regarding the media control-related instruction. When establishing the application data channel based on the P2A connection type, the IMS-AS having received the data channel-related response message from the DCSF may add a response message transmitted from the remote network to a 200 OK response message and transmit the 200 OK response message to UE #1. When transmitting a SIP re-INVITE to the remote network, the IMS-AS may transmit the SIP re-INVITE including only a video or audio-related SDP offer while deleting the SDP offer information related to the application data channel.

Through the foregoing process, the IMS-AS may perform an application data channel connection operation utilizing IMS event subscription information considering the P2A connection type as well as an operation for allocating media resources within the MF entity to establish an application data channel connection between the data channel application server and the UE. The IMS-AS may transmit a SIP re-INVITE message including an SDP offer updated based on the results of the operations to the remote network via the S-CSCF.

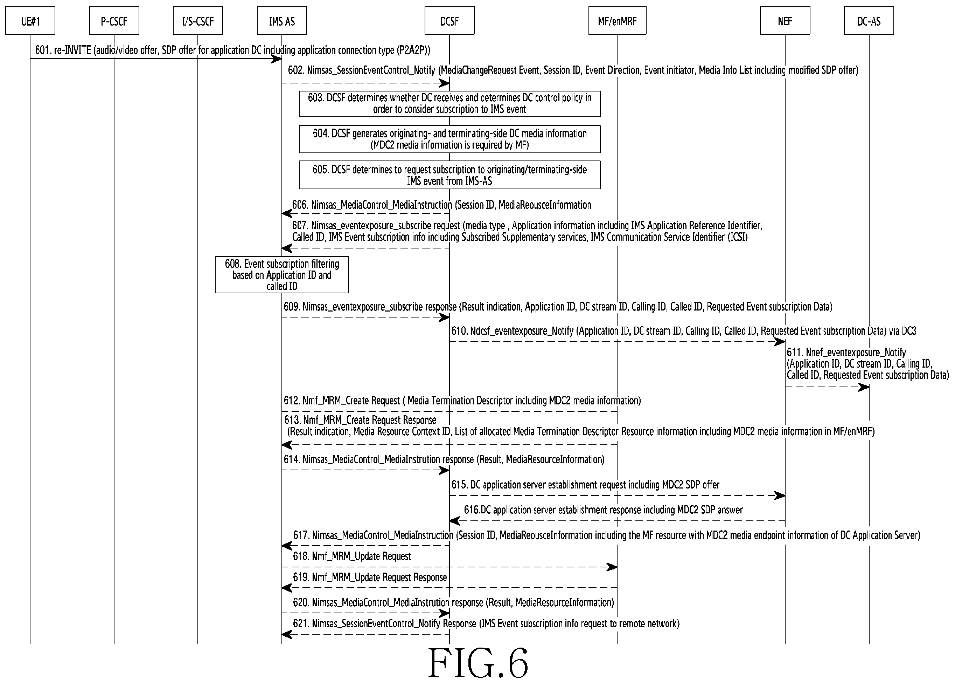

FIG. 6 is a flowchart illustrating an application data channel setup signaling procedure of an IMS-AS according to a connection type of an application data channel according to an embodiment of the disclosure.

FIG. 6 is a flowchart illustrating a method for transmitting information for updating a DCSF policy and updating a related media resource in an MF entity to perform an application data channel connection operation considering a person-to-application-to-person (P2A2P) connection type according to an embodiment of the disclosure.

In operation 601, an IMS-AS may receive an application data channel-related SDP offer message for application data channel connection from a UE through an S-CSCF. The IMS-AS may transmit a request for application data channel connection to the DCSF, based on an application data channel connection request message including SDP offer information received from the S-CSCF and a bootstrap stream ID. Here, when the IMS-AS performs application data channel connection through a local DCSF, based on the bootstrap stream ID, the local IMS-AS may determine to generate a session event control notification (SessionEvent_Control_Notify) message. When application data channel connection is performed through a remote DCSF, based on the bootstrap stream ID, the IMS-AS may retransmit the SDP offer information received from the S-CSCF through the S-CSCF, thereby requesting a remote network to transmit the SDP offer information. An S-CSCF within the remote network having received the updated SDP offer may request application data channel connection. When a service user is able to use an IMS data channel-based service, the IMS-AS may perform a media data channel connection operation for transmitting and receiving application data by transmitting a session connection request for application data channel setup to the DCSF. The IMS-AS may select a DCSF (e.g., the local DCSF or the remote DCSF), based on a bootstrap DC ID received during a bootstrap data channel connection process. In this embodiment, it is assumed that an application data channel connection operation using the local DCSF and an MF is performed.

In operation 602, the IMS-AS may transmit a session event control notification (SessionEventControl_Notify) message including at least one of a MediaChangeRequest event, a session ID, an event direction, an event initiator, or a media info list to the DCSF for an application data channel connection request.

In operation 603, the DCSF having received the information including the media change request event may recognize that transmission of IMS event subscription information to the data channel application server is required when using an IMS data channel service through a data channel application, based on application-related binding information. The DCSF may update a data channel control policy for an application data channel using the IMS event subscription information.

In operation 604, when a connection type of the application data channel is a P2A2P connection type, based on media-related information received from the IMS-AS, the DCSF may generate related information for data channel application server connection. When the connection type of the application data channel is an application data channel using a data channel application server, the DCSF may determine to generate data channel media resource information including information (MDC2 endpoint) for media data channel connection and to update the data channel control policy, based on the related information about the application data channel.

In operation 605, the DCSF may determine to request IMS event subscription information from originating and remote (terminating) networks in consideration of the application data connection type, and a policy and a requirement related to the data channel application. The DCSF may determine whether to provide application-related information for supporting the data channel service and IMS event subscription information according to a request by a data channel application service provider to the data channel application server, based on a related parameter in a DC control request message. In an embodiment of the disclosure, it may be assumed that the data channel service provider transmits in advance, to the DCSF, information about an application that provides the IMS data channel service using IMS event-related information, based on UE information (e.g., including at least one of a calling ID or a DC stream ID) and receiver information (e.g., a called ID). When providing the DCSF with the application-related information as in the embodiment of FIG. 4, the data channel service provider may transmit request information for subscribing to IMS event-related information about a specific application in combination.

In operation 606, the DCSF may include information about an MF for application data channel connection and the data channel application server in data channel media resource information, and may transmit the same to the IMS-AS through media-related instruction (MediaInstruction) information for media control. The media resource information may include information for whether to update or add a data channel media resource in an MF entity. The IMS-AS may transmit packets in a user-plane data channel from each UE to the MF or enMRF. The MF or enMRF may receive, from the DCSF, the media resource information including the media instruction information for transmitting the packets in the user-plane data channel to the data channel application server via an MDC2 interface. The IMS-AS may transmit allocation of media resource information and a request for MDC2 media information to the MF. The MF may allocate a data channel media resource for transmitting application transmitted from the UE to the data channel application server by using the MDC2 media information request.

In operation 607, the DCSF may transmit at least one of IMS event information including at least one of an IMS communication service identifier (ICSI), an IMS application reference identifier or subscribed supplementary services information, or related subscriber information (e.g., at least one of a calling ID, a DC stream ID, or a called ID) to the IMS-AS in order to receive the IMS event subscription information. When an event is updated or information is changed, the DCSF may request transmission of updated or changed information from the IMS-AS. In addition, the DCSF may request separate IMS event subscription information per particular subscriber and subscriber group from the IMS-AS.

In operation 608, the IMS-AS may filter IMS event-related information required by a particular application, based on the IMS event information and the related subscriber information received from the DCSF in operation 607, thereby generating IMS event subscription information required by the data channel application server.

In operation 609, the IMS-AS may transmit IMS event subscription information per application to the DCSF, based on the filtered IMS event-related information transmitted in operation 607. Different IMS event subscription information may be provided per user or per particular user group. When providing event subscription information per subscriber or per subscriber group, separate subscriber information or subscriber group information may be provided in combination within the IMS event subscription information.

In operation 610 and operation 611, the DCSF may transmit the received IMS event subscription information to the data channel application server, based on the IMS event subscription information and related information received from the IMS-AS. When the data channel application server is an application server of a reliable service provider, the DCSF may transmit the IMS event subscription information directly to the data channel application server through a DC4 interface, not via an NEF. When the data channel application server is an unreliable server or a third-party application server, the DCSF may transmit the IMS event subscription information to the NEF through a DC3 interface, and the initial IMS event subscription information may be transmitted to the data channel application server through an N33 interface.

In operation 612, the IMS-AS having received the data channel media resource including MDC2 media information and updated SDP information may transmit media resource information for application data channel connection considering the P2A2P connection type to the MF or enMRF through a media resource management request (Nmf_MRM_Create Request) message. When transmitting application data of the UE to the data channel application server using the MRF, the UE may request the MRF to allocate a related data channel medal resource through an Mr'/Cr interface.

In operation 613, the MF may transmit MDC2 media information and media resource allocation result information of the MF considering the P2A2P connection type to the IMS-AS through a media resource management request response (Nmf_MRM_Create Request Response) message.

In operation 614, the IMS-AS may transmit, to the DCSF, media resource information of the MF entity for P2A2P connection including the MDC2 media information received from the MF or enMRF.

In operation 615 and operation 616, the DCSF may store the media resource information, and may transmit a P2A2P application data channel establishment request to the data channel application server through DC3 or DC4. When the data channel application server accepts the application data channel establishment request transmitted through the foregoing process, the data channel application server may transmit MDC2-related SDP response information (MDC2 media endpoint information) to the DCSF.

In operation 617, the DCSF may update the data channel media resource, based on the MDC2 media endpoint information of the data channel application server transmitted from the data channel application server. The DCSF may transmit data channel media resource information updated based on the MDC2-related SDP response information (MDC2 media endpoint information) to the IMS-AS.

In operations 618 and 619, the IMS-AS may request the media function entity to update a resource, based on the updated data channel media resource information, and may receive an updated result value from the MF.

In operation 620, after receiving the updated result value from the MF, the IMS-AS may notify the DCSF of response information regarding a media control-related instruction including a result of successful data channel-related media resource update.

In operation 621, after receiving the response information regarding the media control-related instruction, the DCSF may transmit, to the IMS-AS, a response message to the session event control notification including at least one of MDC2-related information for the application data channel connection considering the P2A2P connection regarding the media control-related instruction or an IMS event subscription information request of the remote network. Upon receiving the information, the IMS-AS may transmit an updated SIP re-INVITE message including at least one of the MDC2-related information or the IMS event subscription information request of the remote network to the remote network.

Through the foregoing process, the IMS-AS may perform an application data channel connection operation utilizing IMS event subscription information considering the P2A2P connection type as well as an operation for allocating media resources within the MF entity to establish an application data channel connection between the data channel application server and the UE. The IMS-AS may transmit a SIP re-INVITE message including an SDP offer updated based on the results of the operations to the remote network via the S-CSCF.

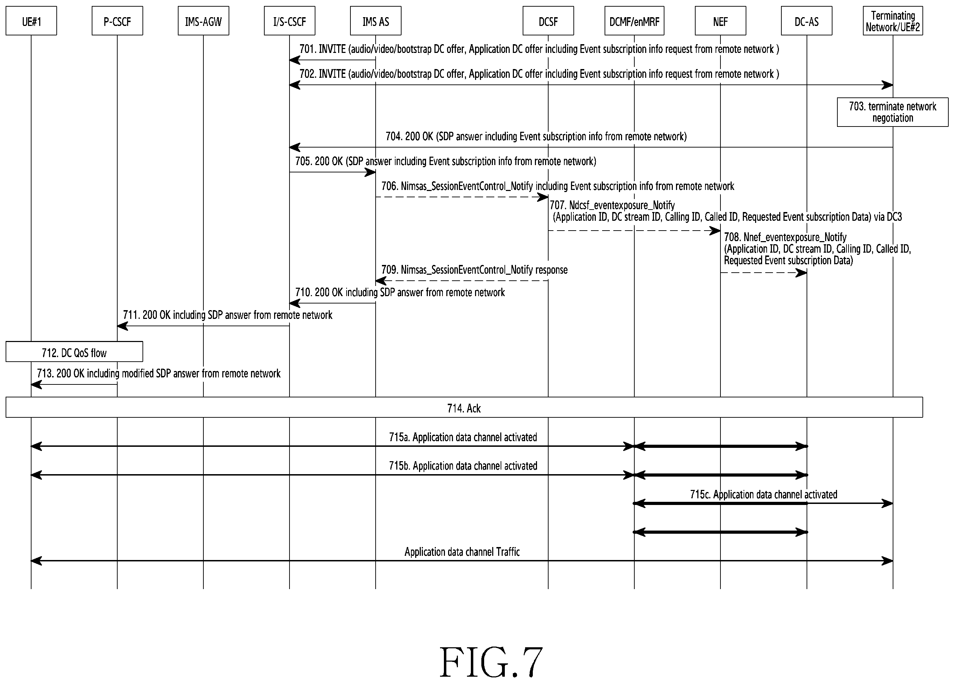

FIG. 7 is a flowchart illustrating transmission of relevant information and an operation procedure for an IMS-AS to connect an application data channel based on a response message received from a remote network according to an embodiment of the disclosure.

In operations 701 and 702, the IMS-AS may receive, from a DCSF, at least one of information regarding data channel resource allocation (MDC2 endpoint) based on the connection type of the application data channel in FIG. 5 and FIG. 6 or information related to an IMS event subscription request. The IMS-AS may transmit a SIP re-INVITE message including SDP offer information updated based on the information received from a DCSF to the remote network. When the application data channel is a P2A connection type, an SDP offer regarding the application data channel may not be included in the re-INVITE message.

In operation 703, a negotiation procedure between the remote network and a UE for connecting an application data channel between the remote network and the UE may be performed based on SIP re-INVITE information including the updated SDP offer information transmitted in operation 702. In this case, the remote network and the UE may determine IMS event subscription information-based application data channel connection according to whether the remote network supports the IMS-AS.

In operation 704 and 705, when a remote UE and a network support providing IMS event subscription information, the remote network and the UE may transmit updated SDP answer information including IMS event subscription information of an IMS-AS in the remote network to the originating network through a 200 OK response message. An S-CSCF may transmit the information inside the 200 OK response message transmitted from the remote network and the UE to the IMS-AS.

When the updated SDP answer information is a response to an application data channel connection request using a P2A connection type, an SDP response relating to audio and video may be included in the 200 OK response message and transmitted to the IMS-AS through the S-CSCF. The S-CSCF may transmit the 200 OK response message to the IMS-AS, and the IMS-AS may notify the DCSF of a result of a successful media change request event.

In operation 706, the IMS-AS may notify the DCSF that the application data channel connection has been successfully completed, based on the SDP answer information including the IMS event subscription information of the remote network received from the remote network and the UE.

In operation 707 and operation 708, the DCSF may transmit the received IMS event subscription information of the remote network to a corresponding data channel application server, based on the IMS event subscription information of the remote network and related information received from the IMS-AS. When the data channel application server is an application server of a reliable service provider, the DCSF may transmit the IMS event subscription information of the remote network directly to the data channel application server through a DC4 interface, not via the NEF. When the data channel application server is an unreliable server or a third-party application server, the DCSF may transmit the IMS event subscription information of the remote network to the NEF through a DC3 interface, and the initial IMS event subscription information of the remote network may be transmitted to the data channel application server through an N33 interface.

In operation 709, the DCSF, which has received a session event control notification message in operation 706, may transmit a response to the notification message to the IMS-AS.

In operations 710 and 711, the IMS-AS may transmit the 200 OK message including the SDP answer information, received from the remote network and the UE, to a P-CSCF through the S-CSCF. In a case of the application data channel using the P2A connection type, the IMS-AS may add a response message (SDP answer for P2A connection between UE#1 and DC-AS) regarding connection request information between UE#1 and the data channel application server to the 200 OK response message including the SDP response related to the audio and video received from the remote network and UE #2, and may transmit the same to the S-CSCF and the P-CSCF.

In operation 712, the P-CSCF may transmit application data channel information in the SDP answer for QoS allocation to a PCF, based on the information in the 200 OK message, and may be allocated appropriate QoS.

In operation 713, the P-CSCF having received QoS information, based on the application data channel information, may finally transmit 200 OK information to the UE.

In operation 714, UE#1 may finally transmit an ACK message indicating that establishment of the application data channel is successfully completed to the remote network and UE#2, based on the information about the remote network and UE.

In operation 715a, the application data channel connection considering the P2A connection type enables UE #1 to use an audio or video-related IMS call session with UE#2 while using an IMS data channel-related service with the data channel application server via MDC2 and the application data channel.

In operations 715b and 715c, the application data channel connection considering the P2A2P connection type enables UE #1 and UE #2 to exchange application data through the data channel application server via an MF or enMRF.

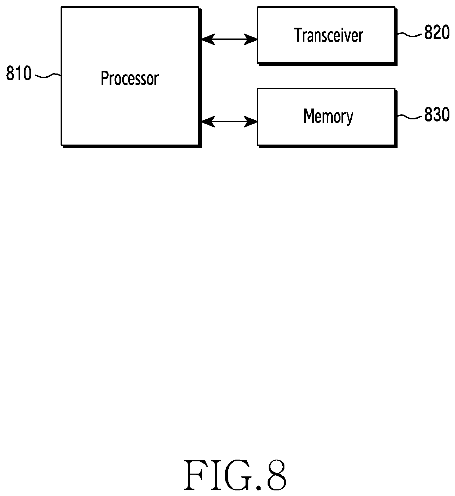

FIG. 8 illustrates an example of a structure of a network entity in a wireless communication system according to various embodiments of the disclosure.

The network entity in FIG. 8 may be at least one of the network entities described in the embodiments of FIGS. 1 to 7.

The network entity according to an embodiment of the disclosure may include a processor 810 which controls the overall operation of the network entity, a transceiver 820 which includes a transmitter and a receiver, and a memory 830. Of course, the example given above is not limiting, and the network entity may include a smaller or larger number of components than the components illustrated in FIG. 8.

According to an embodiment of the disclosure, the transceiver 820 may transmit/receive signals with at least one of other network entities or UEs. The transmitted/received signals may include at least one of control information and data. In the case where the network entity in FIG. 8 is an entity (NF) of a core network, the signals transmitted/received between the network entity and UEs may be transmitted/received via an RAN.

According to an embodiment of the disclosure, the processor 810 may control the overall operation of the network entity to perform the operations according to one of the above-described embodiments of FIGS. 1 to 7 or any combination of two or more thereof. The processor 810, the transceiver 820, and the memory 830 are not necessarily implemented as separate modules, but may be implemented as a single component unit such as a single chip. In addition, the processor 810 may be an application processor (AP), a communication processor (CP), a circuit, an application-specific circuit, or at least one processor. The transceiver 820 may include an interface which wiredly/wirelessly transmits/receive signals to/from UEs, other base stations, or network entities.

According to an embodiment of the disclosure, the memory 830 may store basic programs, application programs, and data, such as configuration information, for the operation of the network entity. In addition, the memory 830 provides the stored data at the request of the processor 810. The memory 830 may include storage media such as a ROM, a RAM, a hard disk, a CD-ROM, and a DVD, or a combination of storage media. In addition, the memory 830 may include multiple memories. Furthermore, the processor 810 may perform at least one of the above-described embodiments of the disclosure, based on the programs for performing at least one of the embodiments, stored in the memory 830.

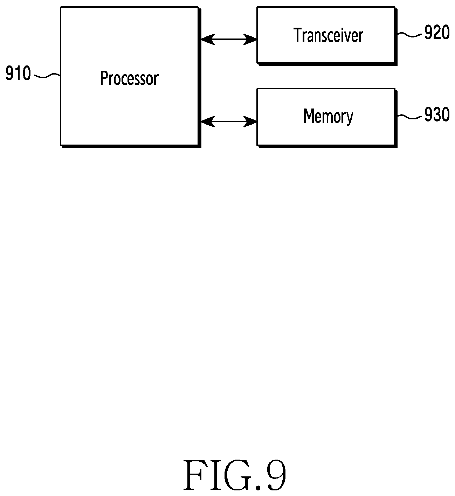

FIG. 9 illustrates an example of a structure of a base station in a wireless communication system according to various embodiments of the disclosure. The base station of FIG. 9 may refer to the RAN node described in the embodiments of FIG. 1 to FIG. 7.

The base station according to an embodiment of the disclosure may include a processor 910 which controls the overall operation of the base station, a transceiver 920 which includes a transmitter and a receiver, and a memory 930. Of course, the example given above is not limiting, and the base station may include a smaller or larger number of components than the components illustrated in FIG. 9.

According to an embodiment of the disclosure, the transceiver 920 may transmit/receive signals with at least one of UEs, other base stations, or network entities. The transmitted/received signals may include at least one of control information and data.

According to an embodiment of the disclosure, the processor 910 may control the overall operation of the network entity to perform the operations according to one of the above-described embodiments of FIGS. 1 to 7 or any combination of two or more thereof. The processor 910, the transceiver 920, and the memory 930 are not necessarily implemented as separate modules, but may be implemented as a single component unit such as a single chip. In addition, the processor 910 may be an application processor (AP), a communication processor (CP), a circuit, an application-specific circuit, or at least one processor. The transceiver 920 may include an interface which wiredly/wirelessly transmits/receive signals to/from UEs, other base stations, or network entities.

According to an embodiment of the disclosure, the memory 930 may store basic programs, application programs, and data, such as configuration information, for the operation of the corresponding base station. In addition, the memory 930 provides the stored data at the request of the processor 910. The memory 930 may include storage media such as a ROM, a RAM, a hard disk, a CD-ROM, and a DVD, or a combination of storage media. In addition, the memory 930 may include multiple memories. Furthermore, the processor 910 may perform at least one of the above-described embodiments of the disclosure, based on the programs for performing at least one of the embodiments, stored in the memory 930.

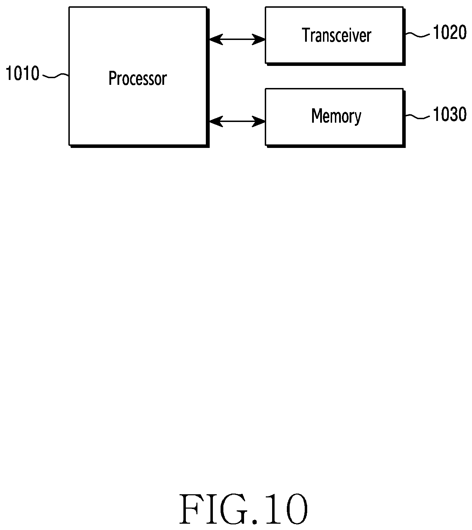

FIG. 10 illustrates an example of a structure of a UE in a wireless communication system according to various embodiments of the disclosure.

The UE according to an embodiment of the disclosure may include a processor 1010 which controls the overall operation of the UE, a transceiver 1020 which includes a transmitter and a receiver, and a memory 1030. Of course, the example given above is not limiting, and the UE may include a smaller or larger number of components than the components illustrated in FIG. 10.

According to an embodiment of the disclosure, the transceiver 1020 may transmit/receive signals with at least one of other UEs, base stations, or network entities. The transmitted/received signals may include at least one of control information and data.

According to an embodiment of the disclosure, the processor 1010 may control the overall operation of the network entity to perform the operations according to one of the above-described embodiments of FIGS. 1 to 7 or any combination of two or more thereof. The processor 1010, the transceiver 1020, and the memory 1030 are not necessarily implemented as separate modules, but may be implemented as a single component unit such as a single chip. In addition, the processor 1010 may be an application processor (AP), a communication processor (CP), a circuit, an application-specific circuit, or at least one processor. The transceiver 1020 may include an interface which wiredly/wirelessly transmits/receive signals to/from other UEs, base stations, or network entities.

According to an embodiment of the disclosure, the memory 1030 may store basic programs, application programs, and data, such as configuration information, for the operation of the UE. In addition, the memory 1030 provides the stored data at the request of the processor 1010. The memory 1030 may include storage media such as a ROM, a RAM, a hard disk, a CD-ROM, and a DVD, or a combination of storage media. In addition, the memory 1030 may include multiple memories. Furthermore, the processor 1010 may perform at least one of the above-described embodiments of the disclosure, based on the programs for performing at least one of the embodiments, stored in the memory 1030.

Methods disclosed in the claims or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The one or more programs include instructions that cause the electronic device to perform the methods according to embodiments of the disclosure as defined by the appended claims or disclosed herein.

These programs (software modules or software) may be stored in nonvolatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

It will be apparent that all or a part of a particular embodiment may be combined with all or a part of one or more other embodiments, which also falls within the scope of the disclosure.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof. Also, the above respective embodiments may be employed in combination, as necessary.

## Claims

1. A method performed by a data channel signaling function (DC-SF) entity in a wireless communication system, the method comprising:
receiving, from a data channel application server (DC-AS), a first request message comprising first information for subscription to an Internet protocol (IP) multimedia subsystem (IMS) event; and
transmitting, to the DC-AS, a response message to the first request message,
wherein the first information comprises at least one of application-related information or IMS event subscription information.

2. The method of claim 1, further comprising:
receiving a second request message comprising second information from an IMS application server (IMS-AS); and
based on the second information, identifying whether to transmit the first information to the DC-AS.

3. The method of claim 1, wherein the application-related information comprises at least one of a called identifier (ID) or an IMS application reference ID, and
wherein the IMS event subscription information comprises at least one of a subscribed supplementary service or an IMS communication service identifier (ICSI).

4. The method of claim 1, wherein the second information comprises at least one of a SessionEstablishmentRequestEvent, a session ID, a calling ID, a called ID, a SessionCase, an event initiator, a MediaInfoList, or a DC stream ID.

5. A method performed by an Internet protocol (IP) multimedia subsystem application server (IMS-AS) entity in a wireless communication system, the method comprising:
identifying whether a terminal has capability to use an IMS data channel (IMS-DC)-based service; and
in case that the terminal has capability to use the IMS DC-based service, transmitting a first request message comprising first information to a data channel signaling function (DC-SF).

6. The method of claim 5, wherein, based on the first information, second information for subscription to an IMS event is transmitted to a data channel application server (DC-AS), and
wherein the second information comprises at least one of application-related information or IMS event subscription information.

7. The method of claim 6, wherein the application-related information comprises at least one of a called identifier (ID) or an IMS application reference ID, and
wherein the IMS event subscription information comprises at least one of a subscribed supplementary service or an IMS communication service identifier (ICSI).

8. The method of claim 5, wherein the first information comprises at least one of a SessionEstablishmentRequestEvent, a session ID, a calling ID, a called ID, a SessionCase, an event initiator, a MediaInfoList, or a DC stream ID.

9. A data channel signaling function (DC-SF) entity in a wireless communication system, the DC-SF entity comprising:
a transceiver; and
at least one controller connected to the transceiver,
wherein the at least one controller is configured to:
receive, from a data channel application server (DC-AS), a first request message comprising first information for subscription to an Internet protocol (IP) multimedia subsystem (IMS) event; and
transmit, to the DC-AS, a response message to the first request message, and
wherein the first information comprises at least one of application-related information or IMS event subscription information.

10. The DC-SF entity of claim 9, wherein the at least one controller is further configured to:
receive a second request message comprising second information from an IMS application server (IMS-AS); and
based on the second information, identify whether to transmit the first information to the DC-AS.

11. The DC-SF entity of claim 9, wherein the application-related information comprises at least one of a called identifier (ID) or an IMS application reference ID, and
wherein the IMS event subscription information comprises at least one of a subscribed supplementary service or IMS communication service identifier (ICSI).

12. The DC-SF entity of claim 9, wherein the second information comprises at least one of a SessionEstablishmentRequestEvent, a session ID, a calling ID, a called ID, a SessionCase, an event initiator, a MediaInfoList, or a DC stream ID.

13. An Internet protocol (IP) multimedia subsystem application server (IMS-AS) entity in a wireless communication system, the IMS-AS entity comprising:
a transceiver; and
at least one controller connected to the transceiver,
wherein the at least one controller is configured to:
identify whether a terminal has capability to use an IMS data channel (IMS-DC)-based service; and
in case that when the terminal has capability to use the IMS DC-based service, transmit a first request message comprising first information to a data channel signaling function (DC-SF).

14. The IMS-AS entity of claim 13, wherein, based on the first information, second information for subscription to an IMS event is transmitted to a data channel application server (DC-AS),
wherein the second information comprises at least one of application-related information or IMS event subscription information,
wherein the application-related information comprises at least one of a called identifier (ID) or an IMS application reference ID, and
wherein the IMS event subscription information comprises at least one of a subscribed supplementary service or IMS communication service identifier (ICSI).

15. The IMS-AS entity of claim 13, wherein the first information comprises at least one of a SessionEstablishmentRequestEvent, a session ID, a calling ID, a called ID, a SessionCase, an event initiator, a MediaInfoList, or a DC stream ID.
